# FASCICULE DE BREVET EUROPEEN

(11) **EP 4 205 563 B1**
(45) Date de publication et mention de la délivrance du brevet: **12.06.2024**
(21) Numéro de dépôt: 22214495.8
(22) Date de dépôt: 19.12.2022
(51) Int. Cl.: A23N 1/00, B30B 9/22, B30B 9/26, B65D 90/10, B65D 90/58

(54) **PRESSOIR, DE PRÉFÉRENCE PNEUMATIQUE, EN PARTICULIER POUR SÉPARER LES PARTIES SOLIDES ET LIQUIDES D'UNE MATIÈRE, TELLE QUE DE LA VENDANGE ET SON PROCÉDÉ DE FERMETURE**
PRESSE, BEVORZUGT PNEUMATISCH, INSBESONDERE ZUM TRENNEN VON FESTEN UND FLÜSSIGEN TEILEN VON EINEM MATERIAL, WIE Z.B. TRAUBEN UND VERFAHREN ZUM VERSCHLIESSEN DERSELBEN
PRESS, PREFERABLY PNEUMATIC, IN PARTICULAR FOR SEPARATING SOLID AND LIQUID PARTS OF A MATERIAL, SUCH AS GRAPE, AND METHOD FOR CLOSING SAME

(30) Priorité: 03.01.2022 FR 2200015
(43) Date de publication de la demande: 05.07.2023
(73) Titulaire: Bucher Vaslin, 49290 Chalonnes sur Loire (FR)
(72) Inventeur: BLOT, Bastien, 49290 Chalonnes-sur-Loire (FR); MAXIME, Hervé, 49290 Chalonnes-sur-Loire (FR)
(74) Mandataire: Ipsilon

(56) Documents cités:
- DE-A1- 3 317 127
- DE-C- 137 914
- FR-A1- 2 570 933
- FR-A1- 2 832 137
- FR-A1- 2 844 256

## Description

La présente invention concerne un pressoir, de préférence pneumatique, en particulier pour séparer les parties solide et liquide d'une matière, telle que de la vendange et son procédé de fermeture.

L'invention concerne en particulier un pressoir comprenant une cuve munie au moins d'une ouverture de chargement/déchargement, d'au moins deux portes de fermeture de ladite ouverture de la cuve, lesdites portes étant montées mobiles entre une position ouverte et une position fermée de ladite ouverture dans laquelle lesdites portes sont disposées côte à côte, et d'un joint périphérique gonflable entourant ladite ouverture.

Les pressoirs, en particulier les pressoirs pneumatiques à membrane sont bien connus à ceux versés dans cet art comme l'illustre en particulier le brevet EP 2062725. Des exemples de fermeture de l'ouverture de chargement/déchargement d'un pressoir sont par exemple également décrits dans les brevets EP1396335, FR2832137, DE3317127. Pour un meilleur confort d'usage, les vignerons recherchent un pressoir avec une ouverture de chargement/déchargement la plus grande possible. En effet, une large ouverture simplifie le remplissage, le vidage et le lavage du pressoir. L'étanchéité de la porte est toutefois primordiale car elle autorise la macération pré-fermentaire dans le pressoir. Cette étanchéité permet encore de limiter l'oxydation des jus et la mise en oeuvre d'un pressurage sous gaz inerte.

Un but de l'invention est de proposer un pressoir dont le confort d'usage est amélioré sans nuire à l'étanchéité de la cuve dudit pressoir.

A cet effet, l'invention a pour objet un pressoir comprenant une cuve munie au moins :
- d'une ouverture de chargement/déchargement,
- d'au moins deux portes de fermeture de ladite ouverture de la cuve, lesdites portes étant montées mobiles entre une position ouverte et une position fermée de ladite ouverture dans laquelle lesdites portes sont disposées côte à côte, et
- d'un joint périphérique d'étanchéité entourant ladite ouverture, caractérisé en ce que le pressoir comprend un élément de fermeture formant un écran imperméable aux gaz et aux liquides disposé, à recouvrement de la totalité de l'ouverture, entre le joint et les portes, en position fermée des portes, ledit élément de fermeture étant, en position fermée des portes pressé par le joint en direction des portes et pris en sandwich entre les portes et le joint. Le joint forme ainsi en coopération avec l'écran formé par l'élément de fermeture une barrière d'étanchéité à l'air autour de ladite ouverture sans nuire à la possibilité de disposer d'une ouverture de grande dimension devant être fermée par au moins deux portes.

Selon un mode de réalisation de l'invention, le pressoir comprend, pour le maintien de l'élément de fermeture formant un écran à l'état positionné à recouvrement de la totalité de l'ouverture de la cuve, des organes de liaison de l'élément de fermeture et de la cuve entre eux. De tels organes de liaison permettent de s'assurer du maintien en position de l'élément de fermeture à recouvrement de l'ouverture au cours de la fermeture des portes.

Selon un mode de réalisation de l'invention, les organes de liaison sont des organes de liaison par aimantation. Il en résulte une facilité de pose et de dépose de l'élément de fermeture formant écran. En variante, les organes de liaison peuvent être de type crochet.

Selon un mode de réalisation de l'invention, l'élément de fermeture formant un écran est de forme quadrangulaire et les organes de liaison de l'élément de fermeture sont disposés au niveau d'angles dudit élément de fermeture.

Selon un mode de réalisation de l'invention, l'élément de fermeture formant un écran est un élément de fermeture souple, se présentant sous forme d'une couverture souple de type bâche pour former un écran plat souple. Cette bâche peut être, par exemple, en PVC (polychlorure de vinyle).

Selon un mode de réalisation de l'invention, l'élément de fermeture formant un écran est un élément de fermeture rigide ou semi-rigide se présentant sous forme d'une plaque. Généralement, une telle plaque présente une épaisseur au moins égale à 1 mm.

Selon un mode de réalisation, l'élément de fermeture est un élément enroulable apte à être stocké à l'état enroulé le long d'un bord de l'ouverture de la cuve en position ouverte de ladite ouverture. Il suffit ainsi de dérouler l'élément de fermeture avant fermeture des portes.

Selon un mode de réalisation de l'invention, l'élément de fermeture formant un écran présente deux faces opposées et est équipé d'au moins une poignée sur l'une de ses faces et la ou au moins l'une des poignées équipant l'une des faces de l'élément de fermeture, de préférence, a la forme d'une anse. La face munie d'une poignée est la face de l'écran tournée vers l'extérieur de la cuve à l'état positionné de l'élément de fermeture à recouvrement de la totalité de l'ouverture. La ou les poignées permettent ainsi une manipulation aisée de l'élément de fermeture.

. L'anse peut être formée par une simple bande rapportée à la surface de la face de l'élément de fermeture devant être équipée de la poignée.

Selon un mode de réalisation de l'invention, les portes de fermeture de ladite ouverture de la cuve sont montées mobiles à coulissement ou à pivotement entre une position ouverte et une position fermée de ladite ouverture. En variante, les portes de fermeture de l'ouverture peuvent être entièrement amovibles. Ces portes sont appliquées sur la cuve en position fermée.

Selon un mode de réalisation de l'invention, l'élément de fermeture et le joint forment un ensemble d'un seul tenant. Il en résulte une simplicité de mise en oeuvre.

Selon un mode de réalisation de l'invention, le joint périphérique d'étanchéité entourant ladite ouverture est un joint gonflable et ledit élément de fermeture est, en position fermée des portes et à l'état gonflé du joint, pressé par le joint en direction des portes et pris en sandwich entre les portes et le joint.

Selon un mode de réalisation de l'invention, le pressoir est un pressoir pneumatique comprenant au moins une membrane divisant le volume interne de la cuve en au moins une chambre de pressurage et une chambre de commande et des moyens d'admission d'un agent de pression dans la chambre de commande et la ou les ouvertures de chargement/déchargement de la cuve débouchent dans la chambre de pressurage.

L'invention a encore pour objet un procédé de fermeture d'un pressoir comprenant une cuve munie d'au moins une ouverture de chargement/déchargement entourée par un joint périphérique d'étanchéité et obturable par deux portes de fermeture, lesdites portes étant montées mobiles entre une position ouverte et une position fermée de ladite ouverture dans laquelle lesdites portes sont disposées côte à côte, caractérisé en ce que le pressoir comprenant en outre un élément de fermeture apte à former un écran imperméable aux liquides et aux gaz ledit procédé comprend, en position ouverte des portes, une étape de positionnement dudit élément de fermeture à recouvrement de la totalité de l'ouverture et une étape de fermeture des portes de sorte que ledit élément de fermeture s'étend entre le joint et les portes en position fermée des portes, et est pressé par le joint en direction des portes et pris en sandwich entre les portes et le joint.

### Brève description des dessins

L'invention sera bien comprise à la lecture de la description suivante d'exemples de réalisation, en référence aux dessins annexés dans lesquels :

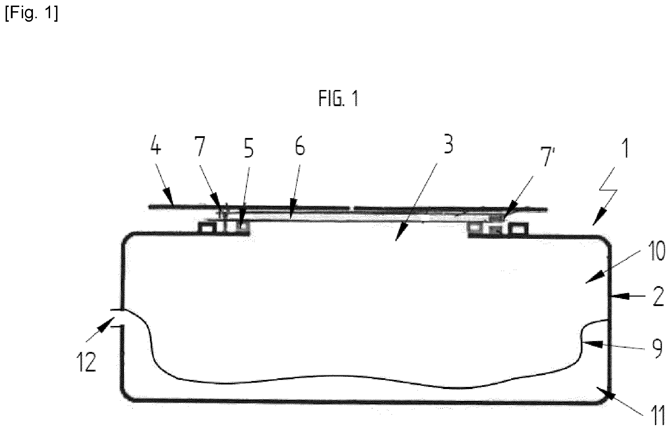

[Fig. 1] représente une vue schématique d'un pressoir conforme à l'invention ;
[Fig. 2] représente une vue partielle en perspective d'un pressoir conforme à l'invention en position ouverte des portes et écartée de l'élément de fermeture de l'ouverture du pressoir ;

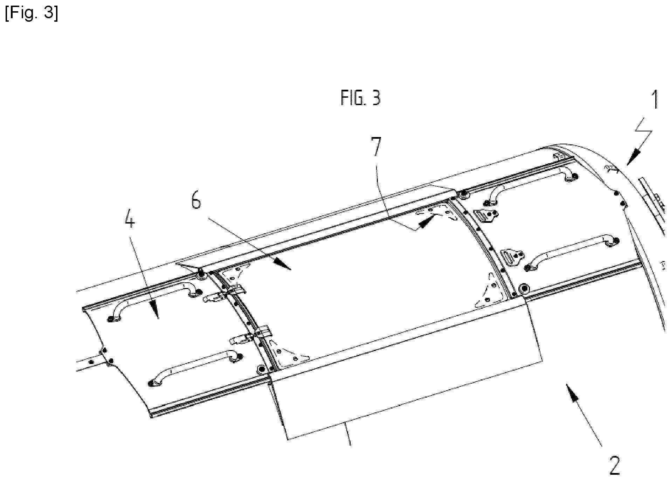

[Fig. 3] représente une vue partielle en perspective d'un pressoir conforme à l'invention en position ouverte des portes et avec l'élément de fermeture formant un écran disposé à recouvrement de l'ouverture du pressoir ;

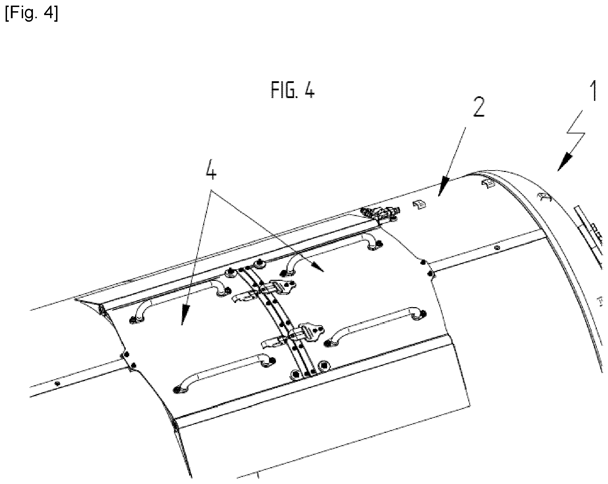

[Fig. 4] représente une vue partielle en perspective d'un pressoir conforme à l'invention en position fermée des portes ;

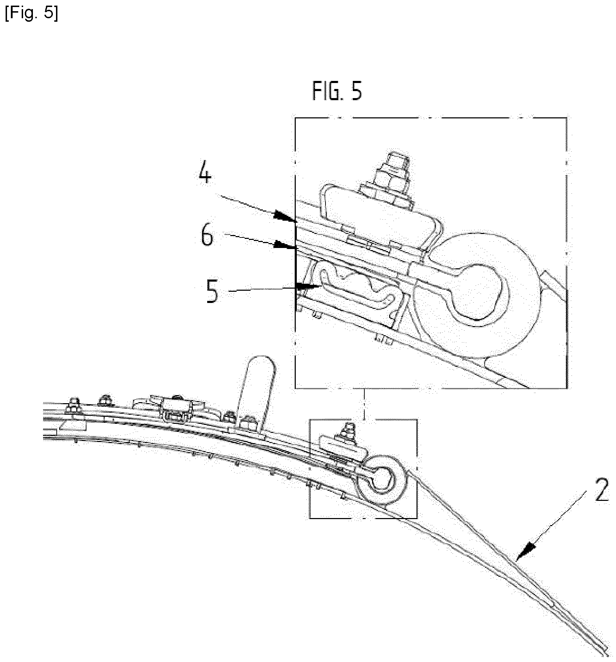

[Fig. 5] représente une vue partielle de la cuve avec une vue de détail en coupe de la cuve dans la zone du joint.
[Fig. 6] représente une vue partielle de la cuve avec deux vues de détail en coupe de la cuve dans la zone de l'élément de fermeture.

Comme mentionné ci-dessus, l'invention a pour objet un pressoir 1 comprenant une cuve 2 munie d'au moins une ouverture 3 de chargement/déchargement de la cuve 2. Cette ouverture 3 est une ouverture de chargement en produits à presser, tels que de la vendange, et une ouverture de déchargement des produits issus du pressage après extraction des jus tels que le marc.

De préférence, et comme dans l'exemple représenté, la cuve 2 est délimitée par une paroi latérale cylindrique et deux flasques fermant la cuve 2 respectivement à une extrémité et à l'autre extrémité de la paroi latérale périphérique.

Cette cuve 2 peut être une cuve rotative montée à rotation autour d'un axe dit horizontal passant par les flasques, cet axe formant généralement l'axe longitudinal central du cylindre formé par la paroi latérale périphérique de la cuve 2.

L'ouverture 3 de chargement/déchargement est ménagée sur la paroi latérale périphérique cylindrique de la cuve 2. Cette cuve 2 est généralement destinée à être mise sous pression.

En particulier, le pressoir 1 peut être un pressoir pneumatique comprenant une membrane 9 divisant le volume interne de la cuve en au moins une chambre 10 de pressurage et une chambre 11 de commande.

Des moyens 12 d'admission d'un agent de pression dans la chambre 11 de commande sont prévus et la ou les ouvertures 3 de chargement/déchargement de la cuve 2 débouchent dans la chambre 10 de pressurage.

Les moyens 12 d'admission d'un agent de pression peuvent être formés par un simple orifice ménagé dans l'un des flasques de la cuve et débouchant dans la chambre de commande, cet orifice étant raccordable à une source d'alimentation en fluide sous pression, tel qu'un réseau d'air comprimé ou autre.

La membrane 9 peut être configurée de manière à pouvoir, d'une part, à l'état pressurisé de la chambre de commande, venir se plaquer contre la partie de la cuve délimitant la chambre 10 de pressurage, et, d'autre part, à l'état dépressurisé, venir se plaquer contre les parties de la cuve délimitant la chambre 11 de commande.

Le détail du fonctionnement d'un tel pressoir ne sera pas fourni car un tel pressoir 1 est bien connu à ceux versés dans cet art.

Bien évidemment, la chambre 10 de pressurage est munie de moyens d'évacuation des jus, tels que des moyens de drainage de ladite cuve.

L'ouverture 3 de chargement/déchargement est une ouverture obturable. Cette ouverture 3, dans l'exemple représenté, est une ouverture de forme générale rectangulaire arrondie au niveau des angles.

Pour permettre de disposer d'une ouverture 3 de grande dimension, ladite ouverture est fermée par au moins deux portes 4. Ces portes 4 sont montées mobiles entre une position ouverte dans laquelle elles dégagent l'accès à l'ouverture 3, et une position fermée dans laquelle elles sont disposées à recouvrement de l'ouverture 3.

Ces portes 4 peuvent être des portes coulissantes comme dans l'exemple représenté où ces portes coulissent suivant une direction parallèle à l'axe de rotation de la cuve 2 ou à l'axe longitudinal du cylindre formé par la paroi latérale périphérique cylindrique de la cuve 2.

En position fermée, ces portes 4 recouvrent chacune sensiblement la moitié de l'ouverture 3. Ces portes 4 sont symétriques par rapport à l'axe médian transversal de l'ouverture 3.

En variante, les portes peuvent être des portes pivotantes ouvrant à la française. En variante encore, les portes peuvent être entièrement amovibles et positionnables en applique sur la cuve.

En position fermée, ces portes 4 sont de préférence coplanaires. Ces portes sont disposées côte à côte, c'est-à-dire l'une à côté de l'autre de préférence de manière contiguë. En effet, de préférence, ces portes s'étendent bord à bord à recouvrement au moins partiel ou non de leurs bords.

Dans l'exemple représenté, ces portes s'étendent bord à bord sans recouvrement de l'un des bords par l'autre bord. Il existe donc un risque de fuite au niveau de la liaison entre lesdites portes 4.

Pour assurer une étanchéité de la cuve 2, le pressoir 1 comprend un joint 5 dit périphérique d'étanchéité entourant l'ouverture 3. De manière générale, ce joint 5 est un joint déformable. Ce joint 5 est, dans les exemples représentés, un joint gonflable dont la pression de gonflage est choisie, de préférence, supérieure à la pression intérieure de la cuve 2. Cette pression de gonflage est généralement comprise entre 0,5 et 4 bars. Ce joint 5 peut être logé à l'intérieur d'une gorge ménagée dans la cuve 2 et entourant l'ouverture 3.

Le pressoir 1 comprend encore un élément 6 de fermeture de l'ouverture 3. Cet élément 6 de fermeture forme un écran imperméable aux gaz en particulier à l'air et aux liquides. Cet écran est positionnable à recouvrement de la totalité de l'ouverture 3 et à recouvrement au moins partiel, de préférence total, du joint 5, de sorte que le joint 5 délimite avec l'élément 6 de fermeture un périmètre fermé.

Cet élément 6 de fermeture est donc interposé, c'est-à-dire disposé entre le joint 5 et les portes 4 en position fermée des portes 4. Cet élément 6 de fermeture peut affecter un grand nombre de formes.

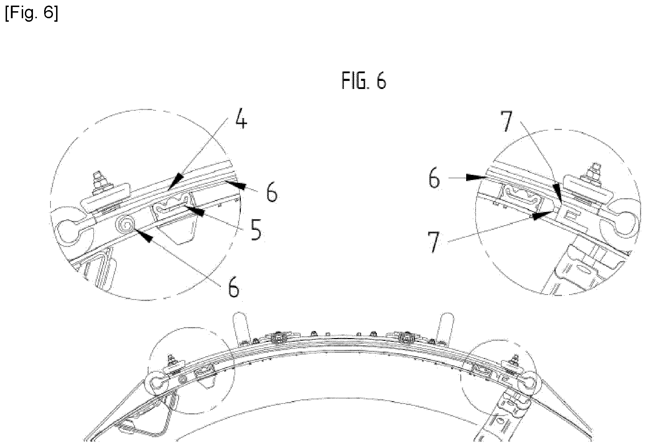

Dans l'exemple représenté, l'élément 6 de fermeture formant un écran est un élément de fermeture souple, réalisé sous forme d'une couverture de type bâche, pour constituer un écran plat souple. Cet élément 6 de fermeture peut être un élément enroulable à la manière d'un store comme illustré à la figure 6. Dans ce cas, un enrouleur est disposé le long d'un bord de l'ouverture 3 de la cuve 2.

Le matériau constitutif dudit élément 6 de fermeture peut être choisi parmi les matériaux plastiques alimentaires de type PVC (polychlorure de vinyle), polyuréthane, polyéthylène haute densité (PEHD), silicone ou autre.

En variante, l'élément 6 de fermeture formant un écran peut être un élément de fermeture rigide ou semi-rigide se présentant sous forme d'une plaque. La plaque peut être une plaque en matériau inoxydable.

Pour faciliter la mise en place de l'élément 6 de fermeture à recouvrement du joint 5 et de l'ouverture 3 et son maintien en position, le pressoir 1 comprend des organes 7 de liaison de l'élément 6 de fermeture et de la cuve 2 entre eux.

Ces organes 7 de liaison peuvent affecter un grand nombre de formes. Ainsi, par exemple, ces organes de liaison peuvent être des organes de liaison par aimantation. En pratique, l'élément 6 de fermeture formant un écran est de forme quadrangulaire et les organes 7 de liaison de l'élément 6 de fermeture sont disposés au niveau d'angles dudit élément 6 de fermeture.

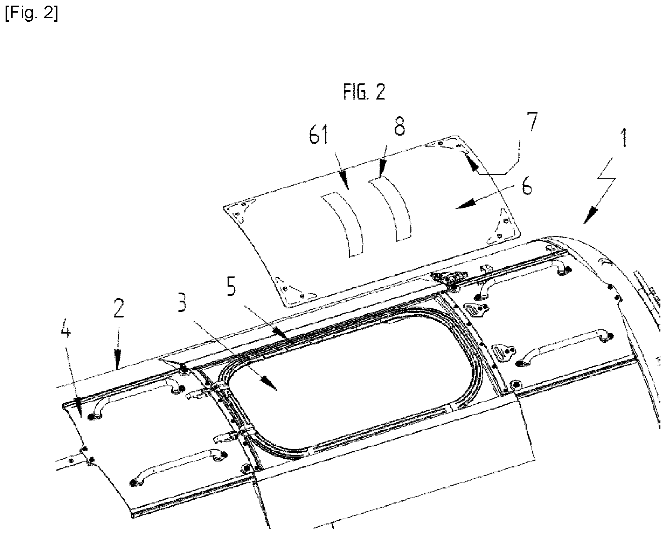

Ces organes de liaison, notamment dans l'exemple de la figure 2, qui sont des aimants sont maintenus appliqués par aimantation à la cuve qui est en métal. L'avantage de cette solution est la facilité de pose et de dépose de l'élément 6 de fermeture qui en résulte. Dans l'exemple de la figure 6, ces organes 7 de liaison sont des crochets.

En variante, et/ou en complément, il peut être prévu un jonc en périphérie de l'élément 6 de fermeture sur la face de l'élément 6 de fermeture devant être tournée vers la cuve. Ce jonc vient se loger dans une gorge ménagée autour de l'ouverture 3 de la cuve 2.

En variante, et/ou en complément, il peut être prévu d'équiper le pourtour de l'élément 6 de fermeture d'une fermeture à glissière se fixant sur la périphérie de l'ouverture 3.

Enfin, pour aider à la manutention de l'élément 6 de fermeture, l'élément 6 de fermeture qui présente deux faces 61 opposées est équipé d'au moins une poignée 8 sur l'une de ses faces 61, à savoir la face 61 dudit élément 6 de fermeture formant écran tournée vers l'extérieur de la cuve 2.

Dans la version la plus simple, la ou les poignées 8 peuvent être réalisées chacune sous forme d'une anse obtenue par une bande rapportée et fixée à chacune de ses extrémités sur ladite face 61 de l'élément 6 de fermeture formant un écran, comme illustré à la figure 2.

Il suffit ainsi de glisser au moins une partie de la main à l'intérieur de l'anse pour permettre la saisie de l'élément 6 de fermeture.

Enfin, il doit être noté que dans les exemples représentés, l'élément 6 de fermeture et le joint 5 sont réalisés sous forme d'éléments distincts. En variante, l'élément 6 de fermeture et le joint 5 forment un ensemble d'un seul tenant.

Indépendamment de la conception du joint 5 et de l'élément 6 de fermeture, le procédé de fermeture s'opère toujours comme suit.

On suppose que les portes 4 sont ouvertes. Le procédé comprend une étape de positionnement de l'élément 6 de fermeture au cours de laquelle ledit élément 6 de fermeture est disposé à recouvrement au moins partiel, généralement total, du joint 5 qui entoure l'ouverture 3, et est fixé à la cuve 2 par les organes 7 de liaison prévus.

Le procédé comprend une étape de fermeture des portes 4 par déplacement à coulissement ou à pivotement des portes 4 de sorte que l'élément 6 de fermeture s'étend entre le joint 5 et les portes 4 en position fermée des portes 4.

Lorsque le joint 5 est un joint gonflable, le procédé comprend généralement après fermeture des portes, une étape de gonflage du joint 5 au cours de laquelle ledit élément 6 de fermeture est pressé par le joint 5 en direction des portes et est pris en sandwich entre les portes 4 et le joint 5. Le joint 5 forme ainsi, en coopération avec l'élément 6 de fermeture, une barrière d'étanchéité au moins à l'air autour de ladite ouverture 3.

Cette solution de fermeture offre de nombreux avantages. Cette solution est simple à mettre en oeuvre et économique. Elle assure une meilleure hygiène et facilite le lavage du pressoir.

Le remplissage du pressoir est facilité, le vidage du marc à la fin du pressurage est également facilité grâce aux dimensions de l'ouverture. La vendange est moins soumise à la trituration lors du remplissage. L'ouverture étant étanche, il existe moins de risque de coincement des portes en raison de la présence du marc.

Enfin, grâce à ce dispositif de fermeture, l'étanchéité requise est obtenue et l'oxydation de la vendange et des jus est évitée.

## Revendications

1. Pressoir (1) comprenant une cuve (2) munie au moins :
- d'une ouverture (3) de chargement/déchargement,
- d'au moins deux portes (4) de fermeture de ladite ouverture (3) de la cuve (2), lesdites portes (4) étant montées mobiles entre une position ouverte et une position fermée de ladite ouverture (3) dans laquelle lesdites portes (4) sont disposées côte à côte, et
- d'un joint (5) périphérique d'étanchéité entourant ladite ouverture (3), **caractérisé en ce que** le pressoir (1) comprend un élément (6) de fermeture formant un écran imperméable aux gaz et aux liquides disposé, à recouvrement de la totalité de l'ouverture (3), entre le joint (5) et les portes (4), en position fermée des portes (4), ledit élément (6) de fermeture étant, en position fermée des portes (4), pressé par le joint (5) en direction des portes (4) et pris en sandwich entre les portes (4) et le joint (5).

2. Pressoir (1) selon la revendication 1, **caractérisé en ce que** le pressoir (1) comprend, pour le maintien de l'élément (6) de fermeture formant un écran à l'état positionné à recouvrement de la totalité de l'ouverture (3) de la cuve (2), des organes (7) de liaison de l'élément (6) de fermeture et de la cuve (2) entre eux.

3. Pressoir (1) selon la revendication 2, **caractérisé en ce que** les organes (7) de liaison sont des organes de liaison par aimantation (71).

4. Pressoir (1) selon l'une des revendications 2 ou 3, **caractérisé en ce que** l'élément (6) de fermeture formant un écran est de forme quadrangulaire et les organes (7) de liaison de l'élément (6) de fermeture sont disposés au niveau d'angles dudit élément (6) de fermeture.

5. Pressoir (1) selon l'une des revendications 1 à 4, **caractérisé en ce que** l'élément (6) de fermeture formant un écran est un élément de fermeture souple se présentant sous forme d'une couverture souple de type bâche pour former un écran plat souple.

6. Pressoir (1) selon l'une des revendications 1 à 4, **caractérisé en ce que** l'élément (6) de fermeture formant un écran est un élément de fermeture rigide ou semi-rigide se présentant sous forme d'une plaque.

7. Pressoir (1) selon l'une des revendications 1 à 6, **caractérisé en ce que** l'élément (6) de fermeture est un élément enroulable apte à être stocké à l'état enroulé le long d'un bord de l'ouverture (3) de la cuve (2) en position ouverte de ladite ouverture (3)

8. Pressoir (1) selon l'une des revendications 1 à 7, **caractérisé en ce que** l'élément (6) de fermeture formant un écran présente deux faces (61) opposées et est équipé d'au moins une poignée (8) sur l'une de ses faces (61) et **en ce que** la ou au moins l'une des poignées (8) équipant l'une des faces (61) de l'élément de fermeture, de préférence, a la forme d'une anse.

9. Pressoir (1) selon l'une des revendications 1 à 8, **caractérisé en ce que** les portes (4) de fermeture de ladite ouverture (3) de la cuve (2) sont montées mobiles à coulissement ou à pivotement entre une position ouverte et une position fermée de ladite ouverture (3).

10. Pressoir (1) selon l'une des revendications 1 à 9, **caractérisé en ce que** l'élément (6) de fermeture et le joint (5) forment un ensemble d'un seul tenant.

11. Pressoir (1) selon l'une des revendications 1 à 10, **caractérisé en ce que** le joint (5) périphérique d'étanchéité entourant ladite ouverture (3) est un joint gonflable et **en ce que** ledit élément (6) de fermeture est, en position fermée des portes (4) et à l'état gonflé du joint (5), pressé par le joint (5) en direction des portes (4) et pris en sandwich entre les portes (4) et le joint (5).

12. Pressoir (1) selon l'une des revendications 1 à 11, **caractérisé en ce que** le pressoir (1) est un pressoir pneumatique comprenant au moins une membrane (9) divisant le volume interne de la cuve en au moins une chambre (10) de pressurage et une chambre (11) de commande et des moyens (12) d'admission d'un agent de pression dans la chambre (11) de commande et **en ce que** la ou les ouvertures (3) de chargement/déchargement de la cuve (2) débouchent dans la chambre (10) de pressurage.

13. Procédé de fermeture d'un pressoir (1) comprenant une cuve (2) munie d'au moins une ouverture (3) de chargement/déchargement entourée par un joint (5) périphérique d'étanchéité et obturable par deux portes (4) de fermeture, lesdites portes (4) étant montées mobiles entre une position ouverte et une position fermée de ladite ouverture (3) dans laquelle lesdites portes (4) sont disposées côte à côte, **caractérisé en ce que** le pressoir (1) comprenant en outre un élément (6) de fermeture apte à former un écran imperméable aux liquides et aux gaz, ledit procédé comprend, en position ouverte des portes (4), une étape de positionnement dudit élément (6) de fermeture à recouvrement de la totalité de l'ouverture (3) et une étape de fermeture des portes (4) de sorte que ledit élément (6) de fermeture s'étend entre le joint (5) et les portes (4) en position fermée des portes (4), et est pressé par le joint (5) en direction des portes et pris en sandwich entre les portes (4) et le joint (5).

## Patentansprüche

1. Presse (1), umfassend einen Behälter (2), der mindestens mit Folgendem ausgestattet ist:
- einer Öffnung (3) zum Laden/Entladen,
- mindestens zwei Türen (4) zum Verschließen der Öffnung (3) des Behälters (2), wobei die Türen (4) beweglich zwischen einer geöffneten Position und einer geschlossenen Position die Öffnung (3) montiert sind, wobei die Türen (4) Seite an Seite angeordnet sind, und
- einer peripherer Dichtung (5), die die Öffnung (3) umgibt, **dadurch gekennzeichnet, dass** die Presse (1) ein Verschlusselement (6) umfasst, das einen undurchlässigen Schirm für Gase und Flüssigkeiten bildet, der in Abdeckung der Gesamtheit der Öffnung (3) zwischen der Dichtung (5) und den Türen (4) in der geschlossenen Position der Türen (4) angeordnet ist, wobei das Verschlusselement (6) in der geschlossenen Position der Türen (4) von der Dichtung (5) in Richtung der Türen (4) gedrückt wird und zwischen die Türen (4) und die Dichtung (5) eingezwängt ist.

2. Presse (1) nach Anspruch 1, **dadurch gekennzeichnet, dass** die Presse (1), um das Verschlusselement (6), das einen Schirm bildet, im Zustand zu halten, der in Abdeckung der Gesamtheit der Öffnung (3) des Behälters (2) positioniert ist, Organe (7) zur Verbindung des Verschlusselements (6) und des Behälters (2) untereinander umfasst.

3. Presse (1) nach Anspruch 2, **dadurch gekennzeichnet, dass** die Organe (7) zur Verbindung Organe zur Verbindung durch Magnetisierung (71) sind.

4. Presse (1) nach einem der Ansprüche 2 oder 3, **dadurch gekennzeichnet, dass** das Verschlusselement (6), das einen Schirm bildet, eine viereckige Form aufweist und die Organe (7) zur Verbindung des Verschlusselements (6) auf der Ebene von Winkeln des Verschlusselements (6) angeordnet sind.

5. Presse (1) nach einem der Ansprüche 1 bis 4, **dadurch gekennzeichnet, dass** das Verschlusselement (6), das einen Schirm bildet, ein flexibles Verschlusselement ist, das die Form einer flexiblen Abdeckung vom Typ Plane aufweist, um einen flexiblen flachen Schirm zu bilden.

6. Presse (1) nach einem der Ansprüche 1 bis 4, **dadurch gekennzeichnet, dass** das Verschlusselement (6), das einen Schirm bildet, ein starres oder halbstarres Verschlusselement ist, das die Form einer Platte aufweist.

7. Presse (1) nach einem der Ansprüche 1 bis 6, **dadurch gekennzeichnet, dass** das Verschlusselement (6) ein aufrollbares Element ist, das ausgelegt ist, um im aufgerollten Zustand entlang einem Rand der Öffnung (3) des Behälters (2) in der geöffneten Position der Öffnung (3) gelagert zu werden.

8. Presse (1) nach einem der Ansprüche 1 bis 7, **dadurch gekennzeichnet, dass** das Verschlusselement (6), das einen Schirm bildet, zwei einander gegenüberliegende Flächen (61) aufweist und mit mindestens einem Griff (8) auf einer seiner Flächen (61) ausgestattet ist, und dadurch, dass der oder mindestens einer der Griffe (8), der eine der Flächen (61) des Verschlusselements (6) ausstattet, vorzugsweise die Form eines Henkels aufweist.

9. Presse (1) nach einem der Ansprüche 1 bis 8, **dadurch gekennzeichnet, dass** die Verschlusstüren (4) der Öffnung (3) des Behälters (2) beweglich gleitend oder schwenkend zwischen einer geöffneten Position und einer geschlossenen Position der Öffnung (3) montiert sind.

10. Presse (1) nach einem der Ansprüche 1 bis 9, **dadurch gekennzeichnet, dass** das Verschlusselement (6) und die Dichtung (5) eine Einheit aus einem einzigen Stück bilden.

11. Presse (1) nach einem der Ansprüche 1 bis 10, **dadurch gekennzeichnet, dass** die periphere Dichtung (5), die die Öffnung (3) umgibt, eine aufblasbare Dichtung ist, und dadurch, dass das Verschlusselement (6) in der geschlossenen Position der Türen (4) und im aufgeblasenen Zustand der Dichtung (5) von der Dichtung (5) in Richtung der Türen (4) gedrückt wird und zwischen den Türen (4) und der Dichtung (5) eingezwängt ist.

12. Presse (1) nach einem der Ansprüche 1 bis 11, **dadurch gekennzeichnet, dass** die Presse (1) eine pneumatische Presse ist, umfassend mindestens eine Membran (9), die das innere Volumen des Behälters in mindestens eine Presskammer (10) und eine Steuerkammer (11) unterteilt, und Mittel (12) zur Aufnahme eines Druckmittels in der Steuerkammer (11), und dadurch, dass die eine oder die mehreren Öffnung(en) (3) zum Laden/Entladen des Behälters (2) in die Presskammer (10) münden.

13. Verfahren zum Schließen einer Presse (1), umfassend einen Behälter (2), ausgestattet mit mindestens einer Öffnung (3) zum Laden/Entladen, umgeben von einer peripheren Dichtung (5) und verschließbar durch zwei Verschlusstüren (4), wobei die Türen (4) beweglich zwischen einer geöffneten Position und einer geschlossenen Position der Öffnung (3) montiert sind, wobei die Türen (4) Seite an Seite angeordnet sind, **dadurch gekennzeichnet, dass** die Presse (1) außerdem ein Verschlusselement (6) umfasst, das ausgelegt ist, um einen Schirm zu bilden, der für Flüssigkeiten und Gase undurchlässig ist, wobei das Verfahren in der geöffneten Position der Türen (4) einen Schritt des Positionierens des Verschlusselements (6) in Abdeckung der Gesamtheit der Öffnung (3) und einen Schritt des Schließens der Türen (4) umfasst, so dass sich das Verschlusselement (6) zwischen der Dichtung (5) und den Türen (4) in der geschlossenen Position der Türen (4) erstreckt und von der Dichtung (5) in Richtung der Türen gedrückt wird und zwischen den Türen (4) und der Dichtung (5) eingezwängt ist.

## Claims

1. A press (1) comprising a tank (2) provided with at least:
- a loading/unloading opening (3),
- at least two doors (4) for closing said opening (3) of the tank (2), said doors (4) being mounted to move between an open position and a closed position of said opening (3) wherein said doors (4) are arranged side by side, and
- a peripheral seal (5) surrounding said opening (3),
**characterized in that** the press (1) comprises a closure element (6) forming a screen that is impermeable to gases and liquids arranged, overlapping the entire opening (3), between the seal (5) and the doors (4), in the closed position of the doors (4), said closure element (6) being, in the closed position of the doors (4), pressed by the seal (5) toward the doors (4) and sandwiched between the doors (4) and the seal (5).

2. The press (1) according to claim 1, **characterized in that** the press (1) comprises, for holding the closure element (6) forming a screen in the state positioned covering the entire opening (3) of the tank (2), members (7) for connecting the closure element (6) and the tank (2) to one another.

3. The press (1) according to claim 2, **characterized in that** the connecting members (7) are magnetic connecting members (71).

4. The press (1) according to one of claims 2 or 3, **characterized in that** the closure element (6) forming a screen is of quadrangular shape and the members (7) for connecting the closure element (6) are arranged at corners of said closure element (6).

5. The press (1) according to one of claims 1 to 4, **characterized in that** the closure element (6) forming a screen is a flexible closure element in the form of a flexible cover of the tarpaulin type to form a flexible flat screen.

6. The press (1) according to one of claims 1 to 4, **characterized in that** the closure element (6) forming a screen is a rigid or semi-rigid closure element in the form of a plate.

7. The press (1) according to one of claims 1 to 6, **characterized in that** the closure element (6) is a roll-up element capable of being stored in the rolled up state along one edge of the opening (3) of the tank (2) in the open position of said opening (3).

8. The press (1) according to one of claims 1 to 7, **characterized in that** the closure element (6) forming a screen has two opposite faces (61) and is equipped with at least one handle (8) on one of its faces (61) and **in that** the or at least one of the handles (8) equipping one of the faces (61) of the closure element, preferably, has the shape of a loop.

9. The press (1) according to one of claims 1 to 8, **characterized in that** the doors (4) for closing said opening (3) of the tank (2) are mounted so as to slide or pivot between an open position and a closed position of said opening (3).

10. The press (1) according to one of claims 1 to 9, **characterized in that** the closure element (6) and the seal (5) form a single unit.

11. The press (1) according to one of claims 1 to 10, **characterized in that** the peripheral seal (5) surrounding said opening (3) is an inflatable seal and **in that** said closure element (6) is, in the closed position of the doors (4) and in the inflated state of the seal (5), pressed by the seal (5) toward the doors (4) and sandwiched between the doors (4) and the seal (5).

12. The press (1) according to one of claims 1 to 11, **characterized in that** the press (1) is a pneumatic press comprising at least one membrane (9) dividing the internal volume of the tank into at least a pressing chamber (10) and a control chamber (11) and means (12) for admitting a pressure agent into the control chamber (11) and **in that** the opening(s) (3) for loading/unloading the tank (2) open into the pressing chamber (10).

13. A method of closing a press (1) comprising a tank (2) provided with at least one opening (3) for loading/unloading surrounded by a peripheral seal (5) and closable by two closure doors (4), said doors (4) being mounted to move between an open position and a closed position of said opening (3) wherein said doors (4) are arranged side by side, **characterized in that** the press (1) further comprising a closure element (6) capable of forming a screen that is impermeable to liquids and gases, said method comprises, in the open position of the doors (4), a step of positioning said closure element (6) to cover the entire opening (3) and a step of closing the doors (4) so that said closure element (6) extends between the seal (5) and the doors (4) in the closed position of the doors (4), and is pressed by the seal (5) toward the doors and sandwiched between the doors (4) and the seal (5).
